(19) Europäisches Patentamt
European Patent Office
Office européen des brevets

(11) EP 4 786 510 A1

(12) EUROPEAN PATENT APPLICATION
published in accordance with Art. 153(4) EPC

(43) Date of publication:
**05.08.2026 Bulletin 2026/32**

(21) Application number: **24871874.4**

(22) Date of filing: **12.09.2024**

(51) International Patent Classification (IPC):
***C08F 290/14*** *(2006.01)* ***C08G 77/24*** *(2006.01)*
***G02B 6/12*** *(2006.01)*

(52) Cooperative Patent Classification (CPC):
**C08F 290/14; C08G 77/24; G02B 6/12**

(86) International application number:
**PCT/JP2024/032625**

(87) International publication number:
**WO 2025/070077 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 JP 2023167538**

(71) Applicant: **DIC Corporation**
**Tokyo 174-8520 (JP)**

(72) Inventors:
- **KANNARI, Hiroyoshi**
  **Sakura-shi, Chiba 285-8668 (JP)**
- **ENGEL, Michael**
  **Sakura-shi, Chiba 285-8668 (JP)**
- **YAMAGUCHI, Junji**
  **Sakura-shi, Chiba 285-8668 (JP)**

(74) Representative: **Schön, Christoph**
**Dr. Schön, Neymeyr & Partner mbB**
**Bavariaring 26**
**80336 München (DE)**

# (54) CURABLE RESIN COMPOSITION, CURED ARTICLE, AND OPTICAL WAVEGUIDE

(57) An object of the present invention is to provide a curable resin composition that has low absorption (low light absorption loss) in the near-infrared region used in optical communication, has excellent heat resistance, and can further form a cured article with a low refractive index. The curable resin composition of the present invention contains a polysiloxane resin (A) having one or more reactive groups selected from the group consisting of a (meth)acryloyl group and a styryl group, and a fluorine atom-containing organic group, a fluorine atom-free (meth)acrylic acid derivative having a structure represented by General Formula (1) described in the specification and/or a fluorine atom-containing (meth) acrylic acid derivative (B) having a structure represented by General Formula (2), and a radical polymerization initiator (C).

EP 4 786 510 A1

## Description

### Technical Field

The present invention relates to a curable resin composition (hereinafter may be abbreviated as a "resin") useful as optical waveguides, optical adhesives, transparent sealants, or related components thereof that can be used in optical applications such as optical communication applications and optical integrated circuit applications, a cured article obtained by curing the curable resin composition, and an optical waveguide including the cured article.

### Background Art

In recent years, higher speed and larger capacity for communication and signal transmission have been increasingly demanded. Signal transmission by light instead of electricity is becoming increasingly important in intra-equipment wiring. Such short-distance optical communication technology is called optical interconnect, and as components of this technology, optoelectronic composite substrates are being actively developed, in which part of copper electric wiring on printed wiring boards is replaced with optical wiring using optical fibers or optical waveguides.

The required properties of materials used in optical waveguides include low absorption in the near-infrared region used in optical communication, the capability of adjusting a refractive index, excellent heat resistance, and excellent productivity. Conventionally, quartz-based materials have been commonly used as materials for optical waveguides, but in recent years, optical waveguides containing polymer materials, which are low in cost and easily processed, have been actively studied.

For example, a fluorinated polyimide that can be used as an optical material for optical waveguides has been reported (PTL 1). However, the fluorinated polyimide-based material contains few CH groups in their molecules and have low absorption in the near-infrared region, but they require baking at high temperatures, which causes a cracking problem due to stress caused by the difference in linear expansion coefficient between a substrate and a film, and require reactive ion etching to perform patterning, which causes a problem of poor productivity caused by an increased number of processes.

Organic/inorganic hybrid materials having an organic reactive group and a siloxane skeleton have been reported as materials that can be patterned by photolithography and have no byproducts (PTL 2). However, the absorption in the near-infrared region is not sufficiently small, and further improvement is demanded.

Light-receiving/emitting elements that transmit and receive light via optical waveguides of optoelectronic composite substrates are sealed with a transparent optical adhesive to improve the reliability of the elements. For example, a light-receiving/emitting element such as a surface-emitting laser element (VCSEL) is connected to an optical waveguide on a substrate using the optical adhesive and is then soldered by reflow to connect electric wiring and the light-receiving/emitting element to each other and to fix the element. Thus, such an optical adhesive is also required to have the same performance as materials used for optical waveguides.

In a situation in which an optical fiber and a silicon optical waveguide are directly connected, the optical adhesive desirably has a refractive index as low as that of quartz-based materials in order to reduce optical loss due to the refractive index difference with the optical fiber. Therefore, such an optical adhesive is required to be able to be adjusted to a refractive index as low as that of quartz-based materials in addition to being transparent in the near-infrared wavelengths used in optical communication.

To solve such a problem, for example, a resin composition containing a liquid aliphatic epoxy compound and a specific aromatic epoxy compound (PTL 3) and a curable resin composition containing a (meth)acrylate having an alicyclic hydrocarbon group (PTL 4) have been developed. However, the absorption in the near-infrared region and the refractive index are not sufficiently low, and further improvement is demanded.

### Citation List

#### Patent Literature

PTL 1: Japanese Unexamined Patent Application Publication No. H5-1148
PTL 2: U.S. Patent No. 6,984,483
PTL 3: Japanese Unexamined Patent Application Publication No. 2020-184091
PTL 4: Japanese Unexamined Patent Application Publication No. H11-61081

### Summary of Invention

Technical Problem

An object of the present invention is to provide a curable resin composition that has low absorption (low light absorption loss) in the near-infrared region used in optical communication, has excellent heat resistance, and can further form a cured article with a low refractive index, a cured article of the curable resin composition, and an optical waveguide including the cured article.

Solution to Problem

The inventors of the present invention have conducted intensive studies in order to achieve the above object. Consequently, it has been found that above object can be achieved by combining a specific polysiloxane resin, a specific (meth)acrylic acid derivative, and a radical polymerization initiator to complete the present invention.
Specifically, the present invention is as follows:

[1] A curable resin composition containing components (A) to (C) below:

(A) a polysiloxane resin having one or more reactive groups selected from the group consisting of a (meth)acryloyl group and a styryl group, and a fluorine atom-containing organic group;
(B) a fluorine atom-free (meth)acrylic acid derivative (B-1) having a structure represented by General Formula (1) below and/or a fluorine atom-containing (meth)acrylic acid derivative (B-2) having a structure represented by General Formula (2) below:

[Chemical Formula 1]

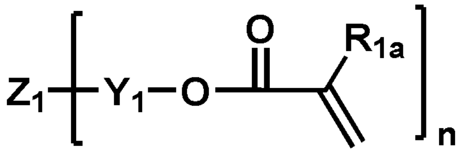

(1)

in General Formula (1) above, $R_{1a}$ is a hydrogen atom or a methyl group; $Y_1$ is any one of a single bond, a methylene group, and an oxyethylene group; $Z_1$ is any one of General Formulae (1-1) to (1-6) below; and n indicates 1 or 2, in which when n is 2, a plurality of $R_{1a}$ and $Y_1$ may be the same or different,

[Chemical Formula 2]

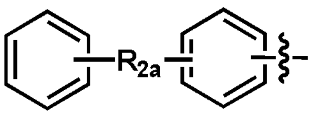

(1-1)

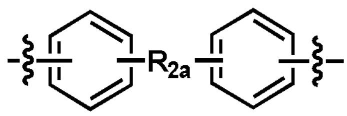

(1-4)

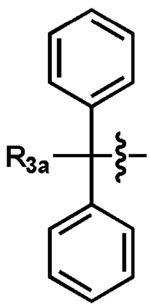

(1-2)

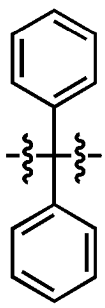

(1-5)

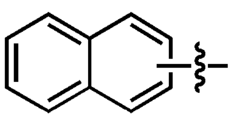

(1-3)

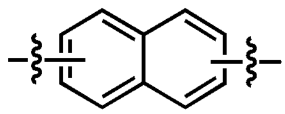

(1-6)

in General Formulae (1-1) and (1-4) above, $R_{2a}$ is a single bond, an oxygen atom, or a methylene group; and in General Formula (1-2) above, $R_{3a}$ indicates a hydrogen atom or a methyl group,

[Chemical Formula 3]

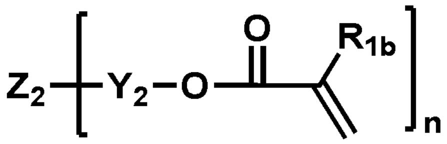
(2)

in General Formula (2) above, $R_{1b}$ is a hydrogen atom or a methyl group; $Y_2$ is a single bond, a $C_{1-9}$ alkylene group, or a fluorine atom-containing $C_{1-9}$ alkylene group; $Z_2$ is any one of a single bond, a hydrogen atom, a fluorine atom, and General Formulae (2-1) to (2-8) below; and n indicates 1 or 2,
in General Formula (2) above, when $Y_2$ is a single bond or a $C_{1-9}$ alkylene group, $Z_2$ is any one of a fluorine atom and General Formulae (2-1) to (2-8) below, and when $Y_2$ is a fluorine atom-containing $C_{1-9}$ alkylene group, $Z_2$ is any one of a single bond, a hydrogen atom, a fluorine atom, and General Formulae (2-1) to (2-8) below, in which when n is 2, a plurality of $R_{1b}$ and $Y_2$ may be the same or different,

[Chemical Formula 4]

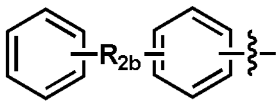
(2-1)

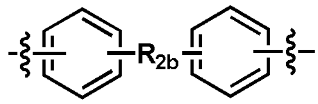
(2-5)

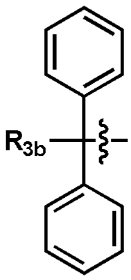
(2-2)

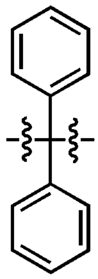
(2-6)

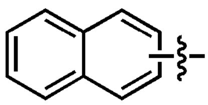
(2-3)

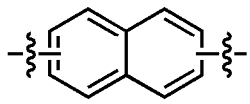
(2-7)

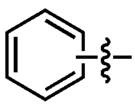
(2-4)

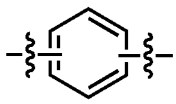
(2-8)

in General Formulae (2-1) and (2-5) above, $R_{2b}$ is a single bond, an oxygen atom, or a methylene group; in General Formula (2-2) above, $R_{3b}$ is a hydrogen atom or a methyl group; and at least one hydrogen atom constituting aromatic rings in General Formulae (2-1) to (2-8) above is substituted by a fluorine atom or a $CF_3$ group; and
(C) a radical polymerization initiator.

[2] The curable resin composition according to [1], in which a mass ratio between the component (A) and the component (B) is 99:1 to 10:90.
[3] The curable resin composition according to [1] or [2], in which $R_{1a}$ in General Formula (1) above is a hydrogen atom, and $Y_1$ is a single bond or a methylene group.
[4] The curable resin composition according to any one of [1] to [3], in which $R_{2a}$ in General Formulae (1-1) and (1-4) above and $R_{2b}$ in General Formulae (2-1) and (2-5) above are a single bond or an oxygen atom.
[5] The curable resin composition according to any one of [1] to [4], in which $R_{3a}$ in General Formula (1-2) above and $R_{3b}$ in General Formula (2-2) above are a hydrogen atom.
[6] The curable resin composition according to any one of [1] to [5], in which a fluorine atom content in the component (A) is 1 to 24% by mass.

[7] The curable resin composition according to any one of [1] to [6], in which the component (A) contains at least one of structures represented by General Formulae (3) and (4) below:

[Chemical Formula 5]

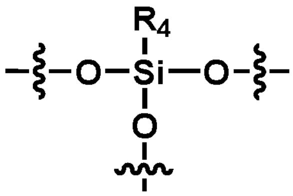

(3)

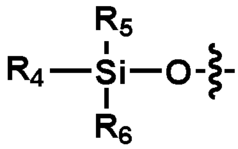

(4)

in General Formulae (3) and (4) above, $R_4$ is a fluorine atom or a $C_{1-20}$ organic group containing one or more fluorine atoms; and in General Formulae (4) and (5) above, $R_5$ and $R_6$ each independently indicate a methyl group or a phenyl group.

[8] The curable resin composition according to [7], in which

the component (A) further contains a structure represented by General Formula (5) below, and
a molar ratio between the structures represented by General Formulae (3) and (4) above and the structure represented by General Formula (5) above is 1:1 to 1:1.4:

[Chemical Formula 6]

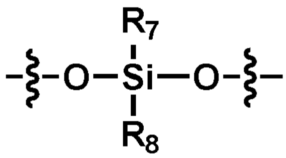

(5)

in General Formula (5) above, $R_7$ and $R_8$ each independently indicate a methyl group or a phenyl group.

[9] A cured article obtained by curing the curable resin composition according to any one of [1] to [8].
[10] An optical waveguide including the cured article according to [9].

Advantageous Effects of Invention

The present invention can provide a curable resin composition that has low absorption (low light absorption loss) in the near-infrared region used in optical communication, has excellent heat resistance, and can further form a cured article with a low refractive index. Description of Embodiments

The present invention will be described below, but the present invention is not limited by the illustration in the following description. In the present specification, "to" denoting a numerical range includes upper and lower limits. In the present specification, "A and/or B" is synonymous with "at least one of A and B." That is, "A and/or B" means that it may be only A, only B, or a combination of A and B.

[Curable Resin Composition]

The curable resin composition of the present embodiment contains (A) a polysiloxane resin, (B) a (meth)acrylic acid derivative, and (C) a radical polymerization initiator as essential components.

<(A) Polysiloxane Resin>

In the present embodiment, the polysiloxane resin has one or more reactive groups selected from the group consisting of a (meth)acryloyl group and a styryl group, and a fluorine atom-containing organic group. In the present specification, the "(meth)acryloyl" group means an acryloyl group or a methacryloyl group.

The polysiloxane resin is only required to have at least one reactive group and may have two or more reactive groups or three or more reactive groups. For example, the reactive group being the (meth)acryloyl group provides particularly excellent UV curability, and being the styryl group provides particularly excellent low light absorption loss,

which is preferred. The ratio of the reactive group may be selected as appropriate in accordance with required properties, and only either of the reactive groups or both of the reactive groups can be contained, which is not limited to a particular manner. From the viewpoint of improving UV curability, it is preferable to have two or more reactive groups in a single molecular chain of the polysiloxane resin. From the viewpoint of not allowing unreacted reactive groups to remain, the number of the reactive groups in a single molecular chain of the polysiloxane resin is preferably 10 or less.

In the polysiloxane resin, a concentration of the reactive groups of 500 to 10,000 mmol/kg provides sufficient curability, which is preferred.

The polysiloxane resin also has a fluorine atom-containing organic group. When the polysiloxane resin has the fluorine atom-containing organic group, the refractive index when the curable resin composition is made into a cured article can be reduced.

Examples of the fluorine atom-containing organic group include groups in which some or all of the hydrogen atoms constituting the organic group are substituted by fluorine atoms. The number of carbon atoms of the fluorine atom-containing organic group is preferably 0 to 8, more preferably 0 to 6, and particularly preferably 0 to 3 from the viewpoint of compatibility. Note that when the number of carbon atoms in the fluorine atom-containing organic group is 0, it means that it is a fluoro group.

Specific examples of the fluorine atom-containing organic group include a fluoro group, a trifluoroethyl group, a trifluoropropyl group, a pentafluorophenyl group, a 1H,1H,2H,2H-nonafluorohexyl group, a 1H,1H,2H,2H-perfluoro-n-octyl group, a 1H,1H,2H,2H-perfluorodecyl group, a 5,5,6,6,7,7,7-heptafluoro-4,4-bis(trifluoromethyl)heptyl group, and a pentafluorophenyloxyalkyl group.

The fluorine atom content in the polysiloxane resin of the present embodiment is preferably 1 to 24% by mass. When the fluorine atom content is 1% by mass or more, the refractive index can be reduced. The fluorine atom content is more preferably 3% by mass or more, even more preferably 5% by mass or more, and particularly preferably 7% by mass or more.

Note that the fluorine atom content in the polysiloxane resin can be measured by combustion ion chromatography analysis.

The polysiloxane resin of the present embodiment is not limited to a particular polysiloxane resin so long as it has a siloxane skeleton, and examples thereof include organotrialkoxysilanes such as methyltrimethoxysilane, methyltriethoxysilane, methyltri-n-butoxysilane, ethyltrimethoxysilane, ethyltriethoxysilane, n-propyltrimethoxysilane, n-propyltriethoxysilane, iso-butyltrimethoxysilane, iso-butyltriethoxysilane, cyclohexyltrimethoxysilane, cyclohexyltriethoxysilane, hexyltrimethoxysilane, hexyltriethoxysilane, octyltrimethoxysilane, octyltriethoxysilane, decyltrimethoxysilane, decyltriethoxysilane, phenyltrimethoxysilane, phenyltriethoxysilane, vinyltrimethoxysilane, vinyltriethoxysilane, 3-glycidoxypropyltrimethoxysilane, 3-glycidoxypropyltriethoxysilane, p-styrylmethoxysilane, p-styrylethoxysilane, p-styryltrimethoxysilane, 3-(meth)acryloyloxypropyltrimethoxysilane, and 3-(meth)acryloyloxypropyltriethoxysilane; diorganodialkoxysilanes such as dimethyldimethoxysilane, dimethyldiethoxysilane, dimethyldi-n-butoxysilane, diethyldimethoxysilane, diethyldiethoxysilane, diphenyldimethoxysilane, diphenyldiethoxysilane, methylphenyldimethoxysilane, methylphenyldiethoxysilane, methylcyclohexyldimethoxysilane, 3-glycidoxypropylmethyldimethoxysilane, 3-glycidoxypropylmethyldiethoxysilane, 3-(meth)acryloyloxypropylmethyldimethoxysilane, and 3-(meth)acryloyloxypropylmethyldiethoxysilane; various chlorosilanes such as methyltrichlorosilane, ethyltrichlorosilane, phenyltrichlorosilane, vinyltrichlorosilane, 3-(meth)acryloyloxypropyltrichlorosilane, dimethyldichlorosilane, diethyldichlorosilane, and diphenyldichlorosilane; and compounds obtained by complete or partial condensation of raw materials such as tetraethoxysilane, tetramethoxysilane, diphenylsilanediol, di-p-tolylsilanediol, bis(4-ethylphenyl)silanediol, bis(4-isopropylphenyl)silanediol, dinaphthylsilanediol, bis([1,1'-biphenyl]-4-yl)silanediol, trimethoxy(4-vinylphenyl)silane, triethoxy(4-vinylphenyl)silane, (4-isopropenylphenyl)trimethoxysilane, trimethoxy(4-vinyl-1-naphthyl)silane, trimethoxy(4'-vinyl-[1,1'-biphenyl]-4-yl)silane, 3,3,3-trifluoropropyltrimethoxysilane, 3,3,3-trifluoropropyltriethoxysilane, trimethoxyfluorosilane, triethoxyfluorosilane, pentafluorophenylmethoxydimethylsilane, pentafluorophenylethoxydimethylsilane, pentafluorophenyltrimethoxysilane, pentafluorophenyltriethoxysilane, 11-pentafluorophenoxyundecyltrimethoxysilane, 11-pentafluorophenoxyundecyltriethoxysilane, 1H,1H,2H,2H-nonafluorohexyltrimethoxysilane, 1H,1H,2H,2H-nonafluorohexyltriethoxysilane, 1H,1H,2H,2H-perfluoro-n-octyltrimethoxysilane, 1H,2H,2H-perfluoro-n-octyltriethoxysilane, 1H,1H,2H,2H-perfluorodecyltrimethoxysilane, and 1H,1H,2H,2H-perfluorodecyltriethoxysilane. From the viewpoint of stability over time, the polysiloxane resin is preferably a polysiloxane resin containing at least one of structures represented by General Formulae (3) and (4) below.

[Chemical Formula 7]

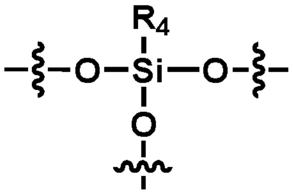 (3) 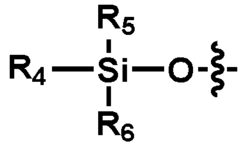 (4)

$R_4$ in General Formulae (3) and (4) above is a fluorine atom or a $C_{1-20}$ organic group containing one or more fluorine atoms, and $R_5$ and $R_6$ in General Formula (4) above each independently indicate a methyl group or a phenyl group. Note that the wavy line parts in the formulae indicate binding sites.

$R_4$ is a fluorine atom or a $C_{1-20}$ organic group containing one or more fluorine atoms, and specific examples thereof include a fluoro group, a trifluoroethyl group, a trifluoropropyl group, a pentafluorophenyl group, a 1H,1H,2H,2H-nonafluorohexyl group, a 1H,1H,2H,2H-perfluoro-n-octyl group, and a 1H,1H,2H,2H-perfluorodecyl group. The organic group may have an oxygen atom, an amide bond, or the like between its carbon atoms and may further have a hydroxy group, a halogen atom, a vinyl group, an epoxy group, a glycidoxypropyl group, a styryl group, a (meth)acryloyloxypropyl group, or the like as a substituent other than a fluorine atom.

The number of carbon atoms of the organic group as $R_4$ is 1 to 20, preferably 1 to 12, more preferably 1 to 8, even more preferably 1 to 6, and particularly preferably 1 to 3 from the viewpoint of compatibility.

The number of fluorine atoms in $R_4$ is one or more, and from the viewpoint of reducing the refractive index when made into the cured article, preferably 1 to 25.

The polysiloxane resin of the present embodiment particularly preferably further contains a structure represented by General Formula (5) below in addition to the structures represented by General Formulae (3) and (4) above. When the polysiloxane resin of the present embodiment contains the structures represented by General Formulae (3) to (5), a polysiloxane resin of a desired molecular weight can be obtained.

[Chemical Formula 8]

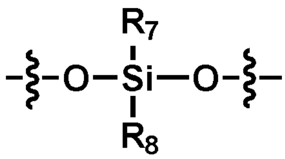 (5)

In General Formula (5) above, $R_7$ and $R_8$ each independently indicate a methyl group or a phenyl group.

In the polysiloxane resin, the molar ratio between the structures represented by General Formulae (3) and (4) above and the structure represented by General Formula (5) above is preferably in a range of 1:1 to 1:1.4. When the molar ratio is within the above range, the number of hydroxy groups and the number of alkoxy groups in the polysiloxane resin can be controlled, water absorption can be reduced, and the absorption in the near-infrared region can be reduced. Furthermore, reducing unreacted hydroxy groups in the polysiloxane resin improves storage stability, and can enhance the ease of handling when preparing the curable resin composition.

The molar ratio between the structures represented by General Formulae (3) and (4) above and the structure represented by General Formula (5) above can be measured by $^1$H-NMR, $^{13}$C-NMR, and $^{29}$Si-NMR.

The polysiloxane resin has a weight average molecular weight of preferably 1,000 to 100,000, more preferably 1,500 to 50,000, even more preferably 1,500 to 10,000, and particularly preferably 2,000 to 5,000. When the weight average molecular weight of the polysiloxane resin is 1,000 or more, the curable resin composition of the present embodiment becomes tough when made into the cured article, and when it is 100,000 or less, compatibility with a (meth)acrylic acid derivative described below becomes good, and the ease of handling when made into the curable resin composition is improved.

The weight average molecular weight is a measured value in terms of polystyrene by gel permeation chromatography (GPC) using tetrahydrofuran (THF) as an elution solvent.

[Method for Producing (A) Polysiloxane Resin]

The method for producing the polysiloxane resin in the present embodiment is not limited to a particular method, and known and customary condensation reactions can be used. The following shows a method for producing the polysiloxane resin containing the structural formulae represented by General Formulae (3) to (5) above, but this is not limiting.

The condensation reaction among a compound containing the structure represented by General Formula (3)

above, a compound containing the structure represented by General Formula (4) above, and a compound containing the structure represented by General Formula (5) above is performed in the presence of an acidic or basic catalyst.

Examples of the acidic catalyst include boric acid, trimethoxyboron, triethoxyboron, tri-n-propoxyboron, triisopropoxyboron, tri-n-butoxyboron, triisobutoxyboron, tri-sec-butoxyboron, tri-tert-butoxyboron, trimethoxyaluminum, triethoxyaluminum, tri-n-propoxyaluminum, triisopropoxyaluminum, tri-n-butoxyaluminum, triisobutoxyaluminum, tri-sec-butoxyaluminum, tri-tert-butoxyaluminum, tetramethoxytitanium, tetraethoxytitanium, tetra-n-propoxytitanium, tetra-isopropoxytitanium (titanium tetraisopropoxide), tetra-n-butoxytitanium, tetra-isobutoxytitanium, tetra-sec-butoxytitanium, tetra-tert-butoxytitanium, tetramethoxyzirconium, tetraethoxyzirconium, tetra-n-propoxyzirconium, tetra-isopropoxyzirconium, tetra-n-butoxyzirconium, tetra-isobutoxyzirconium, tetra-sec-butoxyzirconium, tetra-tert-butoxy zirconium, hydrochloric acid, sulfuric acid, phosphoric acid, acetic acid, maleic acid, methanesulfonic acid, p-toluenesulfonic acid, and trifluoromethanesulfonic acid.

Examples of the basic catalyst include sodium hydroxide, potassium hydroxide, lithium hydroxide, magnesium hydroxide, calcium hydroxide, strontium hydroxide, barium hydroxide, ammonium hydroxide, tetramethylammonium hydroxide, tetrabutylammonium hydroxide, triethylamine, N-ethyl diisopropylamine, dimethylaminoethanol, triethanolamine, and 2-amino-2-methyl-1-propanol.

Among these catalysts, from the viewpoint of reactivity, any one or more of lithium hydroxide, magnesium hydroxide, calcium hydroxide, strontium hydroxide, barium hydroxide, ammonium hydroxide, and triethylamine are preferably used.

The amount of the catalyst used is preferably 0.001 to 10% by mass, and particularly preferably 0.01 to 1% by mass with respect to the total content of the compound containing the structure represented by General Formula (3) above, the compound containing the structure represented by General Formula (4) above, and the compound containing the structure represented by General Formula (5) above. When the amount of the catalyst used is within the above range, the condensation reaction sufficiently proceeds, which is preferred.

Note that in the condensation reaction among the compound containing the structure represented by General Formula (3) above, the compound containing the structure represented by General Formula (4) above, and the compound containing the structure represented by General Formula (5), the condensation reaction may be performed by adding a fluorine atom-free siloxane monomer that may have one or more reactive groups selected from the group consisting of a (meth)acryloyl group and a styryl group, apart from the above compounds.

Specific examples of the siloxane monomer include 3-(methacryloyloxy)propyltrimethoxysilane, 3-(acryloyloxy)propyltrimethoxysilane, and p-styryltrimethoxysilane.

The condensation reaction may be carried out either in a solvent-free condition or in the presence of a solvent, but it is preferably carried out in the presence of a solvent in order to make the reaction system homogeneous. The reaction solvent is only required not to react with raw materials, and examples thereof include ketones such as acetone and methyl ethyl ketone (MEK); aromatic hydrocarbons such as benzene, toluene, and xylene; glycols such as ethylene glycol, propylene glycol, and hexylene glycol; glycol ethers such as ethyl cellosolve, butyl cellosolve, ethyl carbitol, butyl carbitol, diethyl cellosolve, and diethyl carbitol; and amides such as N-methyl-2-pyrrolidone (NMP) and N,N-dimethylformamide (DMF). One of these solvents may be used alone, or two or more may be used in combination. Among these, toluene is preferred.

Since the condensation reaction is a dealcoholization condensation reaction, it is preferably reacted in the absence of water and more preferably performed under an inert gas atmosphere such as nitrogen gas.

The reaction temperature may be adjusted as appropriate so as to give desired molecular weight distribution and may be usually 30 to 100°C. The reaction time may also be adjusted as appropriate and is usually 1 to 40 hours.

After the end of the condensation reaction, the resulting polysiloxane resin is filtered through a membrane filter to remove the reaction solvent and byproduct alcohol under reduced pressure. It is also preferable to perform purification treatment as needed.

<(B) (Meth)acrylic Acid Derivative>

The curable resin composition according to the present embodiment contains, as the (meth)acrylic acid derivative, a fluorine atom-free (meth)acrylic acid derivative (B-1) having the structure represented by General Formula (1) above and/or a fluorine atom-containing (meth)acrylic acid derivative (B-2) having the structure represented by General Formula (2) above. Note that in the present specification, (meth)acrylic acid refers to at least one of acrylic acid and methacrylic acid.

When the curable resin composition according to the present embodiment contains the above specific (meth)acrylic acid derivative, it serves to dilute the polysiloxane resin with high viscosity during the preparation of the curable resin composition, and thus the ease of handling of as the curable resin composition can be improved. In addition, when the above specific (meth)acrylic acid derivative is contained, the heat resistance is improved.

To exhibit sufficient curability and heat resistance of the curable resin composition, the mass ratio between the

polysiloxane resin and the (meth)acrylic acid derivative is preferably in a range of 99:1 to 10:90, more preferably in a range of 90:10 to 10:90, and particularly preferably in a range of 80:20 to 20:80.

In the present embodiment, the (meth)acrylic acid derivative is only required to contain at least one of the fluorine atom-free (meth)acrylic acid derivative (B-1) and the fluorine atom-containing (meth)acrylic acid derivative (B-2), but from the viewpoint of achieving both a low refractive index and heat resistance, it is preferable to contain both. Note that when only one of the fluorine atom-free (meth)acrylic acid derivative (B-1) and the fluorine atom-containing (meth)acrylic acid derivative (B-2) is contained, from the viewpoint of reducing the refractive index when made into the cured article, the fluorine atom-containing (meth)acrylic acid derivative (B-2) is preferably contained.

The following specifically describes the fluorine atom-free (meth)acrylic acid derivative (B-1) and the fluorine atom-containing (meth)acrylic acid derivative (B-2).

<(B-1) Fluorine Atom-Free (Meth)acrylic Acid Derivative>

In the present embodiment, the fluorine atom-free (meth)acrylic acid derivative (B-1) has a structure represented by General Formula (1) below.

[Chemical Formula 9]

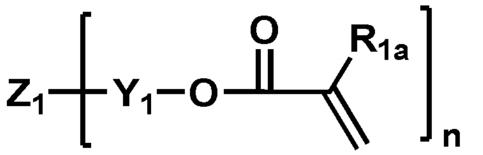

(1)

In General Formula (1) above, $R_{1a}$ is a hydrogen atom or a methyl group, $Y_1$ is any one of a single bond, a methylene group, and an oxyethylene group, $Z_1$ is any one of General Formulae (1-1) to (1-6) below, and n indicates 1 or 2. When n is 2, a plurality of $R_{1a}$ and $Y_1$ may be the same or different.

[Chemical Formula 10]

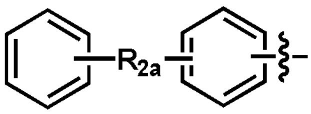

(1-1)

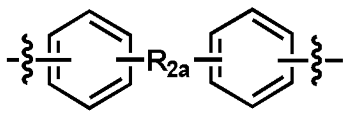

(1-4)

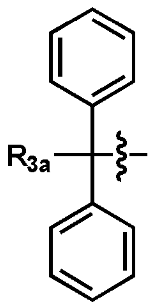

(1-2)

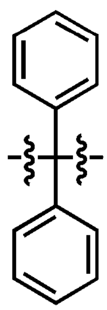

(1-5)

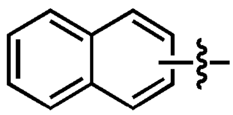

(1-3)

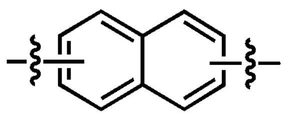

(1-6)

In General Formulae (1-1) and (1-4) above, $R_{2a}$ is a single bond, an oxygen atom, or a methylene group, and in General Formula (1-2) above, $R_{3a}$ indicates a hydrogen atom or a methyl group. Note that the wavy line parts in the formulae mean that they are binding sites with $Y_1$ in General Formula (1) above.

In the present embodiment, by containing the fluorine atom-free (meth)acrylic acid derivative having the structure represented by General Formula (1) above, an aliphatic C-H bond concentration can be reduced, and the absorption in the near-infrared region can be inhibited. In addition, the viscosity of the (meth)acrylic acid derivative decreases, and when made into the curable resin composition, solidification of the curable resin composition can be inhibited.

$R_{1a}$ may be a hydrogen atom or a methyl group and is preferably a hydrogen atom from the viewpoint of reducing

light absorption loss.

$Y_1$ may be a single bond, a methylene group, or an oxyethylene group and is preferably a single bond or a methylene group from the viewpoint of reducing light absorption loss.

Any combination of $R_{1a}$ and $Y_1$ is not limited, and it is preferred that $R_{1a}$ be a hydrogen atom and $Y_1$ be a single bond or a methylene group from the viewpoint of reducing light absorption loss.

In General Formula (1) above, $Z_1$ is not limited to particular one so long as it is any of General Formulae (1-1) to (1-6) above.

When $Z_1$ is General Formula (1-1) or (1-4), the resulting curable resin composition has particularly excellent UV curability, which is preferred.

When $Z_1$ is General Formula (1-2) or (1-5), compatibility with the polysiloxane resin is particularly excellent, which is preferred.

When $Z_1$ is General Formula (1-3) or (1-6), the resulting curable resin composition has particularly excellent heat resistance, which is preferred.

In General Formula (1) above, when $Z_1$ is General Formula (1-1) or (1-4) above, $R_{2a}$ in the formula may be a single bond, an oxygen atom, or a methylene group and is preferably a single bond or an oxygen atom from the viewpoint of reducing light absorption loss.

In General Formula (1) above, when $Z_1$ is General Formula (1-2) above, $R_{3a}$ in the formula may be a hydrogen atom or a methyl group and is preferably a hydrogen atom from the viewpoint of reducing light absorption loss.

<(B-2) Fluorine Atom-Containing (Meth)acrylic Acid Derivative>

In the present embodiment, the fluorine atom-containing (meth)acrylic acid derivative (B-2) has the structure represented by General Formula (2) below.

[Chemical Formula 11]

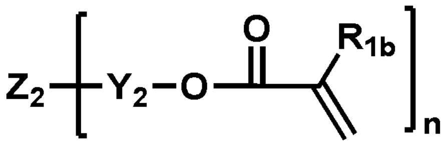 (2)

In General Formula (2) above, $R_{1b}$ is a hydrogen atom or a methyl group, $Y_2$ is a single bond, a $C_{1-9}$ alkylene group, or a fluorine atom-containing $C_{1-9}$ alkylene group, $Z_2$ is any one of a single bond, a hydrogen atom, a fluorine atom, and General Formulae (2-1) to (2-8) below, and n indicates 1 or 2.

In General Formula (2) above, when $Y_2$ is a single bond or a $C_{1-9}$ alkylene group, $Z_2$ is any one of a fluorine atom and General Formulae (2-1) to (2-8) below, and when $Y_2$ is a fluorine atom-containing $C_{1-9}$ alkylene group, $Z_2$ is any one of a single bond, a hydrogen atom, a fluorine atom, and General Formulae (2-1) to (2-8) below. When n is 2, a plurality of $R_{1b}$ and $Y_2$ may be the same or different.

[Chemical Formula 12]

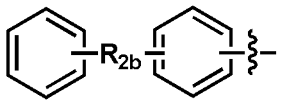
(2-1)

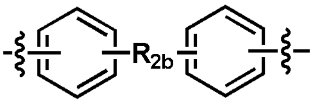
(2-5)

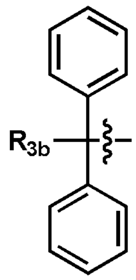
(2-2)

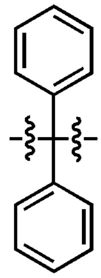
(2-6)

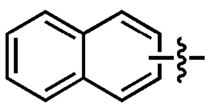
(2-3)

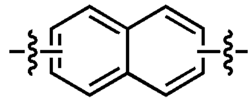
(2-7)

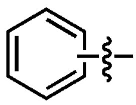
(2-4)

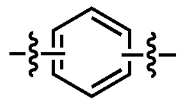
(2-8)

In General Formulae (2-1) and (2-5) above, $R_{2b}$ is a single bond, an oxygen atom, or a methylene group, and in General Formula (2-2) above, $R_{3b}$ is a hydrogen atom or a methyl group. At least one hydrogen atom constituting aromatic rings in General Formulae (2-1) to (2-8) above is substituted by a fluorine atom or a $CF_3$ group. That is, some or all of the hydrogen atoms constituting the aromatic rings in General Formulae (2-1) to (2-8) above are substituted by fluorine atoms or $CF_3$ groups. Note that the wavy line parts in the formulae mean that they are binding sites with $Y_2$ in General Formula (2) above.

In the present embodiment, when the (meth)acrylic acid derivative contains the structure represented by General Formula (2) above, an aliphatic C-H bond concentration can be reduced, the absorption in the near-infrared region can be inhibited, the viscosity of the (meth)acrylic acid derivative decreases, and when made into the curable resin composition, solidification of the curable resin composition can be inhibited. In addition, the refractive index can be reduced when made into the cured article.

$R_{1b}$ may be a hydrogen atom or a methyl group and is preferably a hydrogen atom from the viewpoint of reducing light absorption loss.

$Y_2$ may be a single bond, a $C_{1-9}$ alkylene group, or a fluorine atom-containing $C_{1-9}$ alkylene group and is preferably a single bond or a methylene group from the viewpoint of light absorption loss.

Note that when $Y_2$ is a $C_{1-9}$ alkylene group or a fluorine atom-containing $C_{1-9}$ alkylene group, the number of carbon atoms in the alkylene group is preferably 1 to 6, more preferably 1 to 4, and particularly preferably 1 or 2.

Any combination of $R_{1b}$ and $Y_2$ is not limited, and it is preferred that $R_{1b}$ be a hydrogen atom and $Y_2$ be a single bond or a methylene group from the viewpoint of reducing light absorption loss.

In General Formula (2) above, $Z_2$ is not limited to particular one so long as it is any one of a single bond, a hydrogen atom, a fluorine atom, and General Formulae (2-1) to (2-8) above. Note that some or all of the hydrogen atoms constituting the aromatic rings in General Formulae (2-1) to (2-8) above are substituted by fluorine atoms or $CF_3$ groups.

When $Z_2$ is General Formula (2-1) or (2-5), the resulting curable resin composition has particularly excellent UV curability, which is preferred.

When $Z_2$ is General Formula (2-2) or (2-6), compatibility with the polysiloxane resin is particularly excellent, which is preferred.

When $Z_2$ is General Formula (2-3) or (2-7), the resulting curable resin composition has particularly excellent heat resistance, which is preferred.

When $Z_2$ is General Formula (2-4) or (2-8), the resulting curable resin composition has particularly excellent light absorption loss, which is preferred.

In General Formula (2) above, when $Z_2$ is General Formula (2-1) or (2-5) above, $R_{2b}$ in the formula may be a single bond, an oxygen atom, or a methylene group and is particularly preferably a single bond or an oxygen atom from the viewpoint of reducing light absorption loss.

In General Formula (2) above, when $Z_2$ is General Formula (2-2) above, $R_{3b}$ in General Formula (2-2) above may

be a hydrogen atom or a methyl group and is particularly preferably a hydrogen atom from the viewpoint of reducing light absorption loss.

[Method for Producing (B) (Meth)acrylic Acid Derivative]

The method for producing the (meth)acrylic acid derivative in the present embodiment is not limited to a particular method, and it can be produced by any known and customary method.

For example, a dehydration condensation reaction between (meth)acrylic acid and a corresponding hydroxy group-containing compound may be performed, or a dehydrohalogenation reaction between (meth)acrylic acid halide and a corresponding hydroxy group-containing compound may be performed in the presence of a basic substance. Note that when the fluorine atom-containing (meth)acrylic acid derivative is produced, a fluorine atom-containing hydroxy group-containing compound may be used as the corresponding hydroxy group-containing compound.

In the case of the dehydration condensation reaction, it can be obtained by being reacted at a temperature of preferably 70 to 150°C in the presence of an esterification catalyst such as p-toluenesulfonic acid or sulfuric acid and a polymerization inhibitor such as hydroquinone or phenothiazine preferably in the presence of a solvent (e.g., toluene, benzene, cyclohexane, n-hexane, n-heptane, or the like) by a known method. The ratio of (meth)acrylic acid used is preferably 1 to 5 mol, and more preferably 1.05 to 2 mol with respect to 1 mol of the hydroxy group-containing compound. The esterification catalyst is made present at a concentration of preferably 0.1 to 15 mol%, and more preferably 1 to 6 mol% with respect to (meth)acrylic acid used.

In the dehydrohalogenation reaction in the presence of the basic substance, it can be obtained by, for example, reacting (meth)acryloyl chloride and the corresponding hydroxy group-containing compound. In that process, it is preferable to add the basic substance such as triethylamine, pyridine, potassium hydroxide, sodium hydroxide, or the like. It is also preferable to add a phase transfer catalyst such as benzyltributylammonium chloride, tetrabutylammonium bromide, or benzyltriethylammonium chloride. The (meth)acrylic derivative can be obtained by reacting (meth)acryloyl chloride and the corresponding hydroxy group-containing compound in the presence of a solvent (e.g., toluene, benzene, cyclohexane, n-hexane, n-heptane, acetone, tetrahydrofuran, dichlorobenzene, cyclopentyl methyl ether, or the like) or water preferably at a temperature of -10 to 100°C.

<(C) Radical Polymerization Initiator>

In the present embodiment, the radical polymerization initiator is not limited to a particular radical polymerization initiator so long as it starts radical polymerization by heating or irradiation with active rays such as ultraviolet rays and visible rays, and examples thereof include thermal radical polymerization initiators and photo-radical polymerization initiators.

Examples of the photo-radical polymerization initiator include 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, thioxanthone and thioxanthone derivatives, 2,2'-dimethoxy-1,2-diphenylethan-1-one, 2,4,6-trimethylbenzoyl diphenylphosphine oxide, bis(2,4,6-trimethylbenzoyl)phenylphosphine oxide, 2-methyl-1-[4-(methylthio)phenyl]-2-morpholino-1-propanone, and 2-benzyl-2-dimethylamino-1-(4-morpholinophenyl)-butan-1-one.

Examples of commercially available products of these radical polymerization initiators include "Irgacure-184," "Irgacure-149," "Irgacure-261," "Irgacure-369," "Irgacure-500," "Irgacure-651," "Irgacure-754," "Irgacure-784," "Irgacure-819," "Irgacure-907," "Irgacure-1116," "Irgacure-1664," "Irgacure-1700," "Irgacure-1800," "Irgacure-1850," "Irgacure-2959," "Irgacure-4043," and "Irgacure-1173" (manufactured by Ciba Specialty Chemicals), "Lucirin TPO" (manufactured by BASF), "Kayacure-DETX," "Kayacure-MBP," "Kayacure-DMBI," "Kayacure-EPA," and "Kayacure-OA" (manufactured by Nippon Kayaku Co., Ltd.), "Vicure-10" and "Vicure-55" (manufactured by Stauffer Chemical Company), "Trigonal-P1" (manufactured by Akzo), "Sandoray 1000" (manufactured by Sandoz), "Deep" (manufactured by Upjohn), and "Quantacure-PDO," "Quantacure-ITX," and "Quantacure-EPD" (manufactured by Ward Blenkinsop).

To exhibit sufficient curability of the curable resin composition, the radical polymerization initiator is preferably in a range of 0.05 to 20 parts by mass and more preferably in a range of 0.1 to 10 parts by mass with respect to 100 parts by mass of the curable resin composition.

The fluorine atom content in the curable resin composition of the present embodiment is preferably 1 to 30% by mass. When the fluorine atom content in the curable resin composition is 1% by mass or more, the refractive index when made into the cured article can be reduced. When the fluorine atom content in the curable resin composition is 30% by mass or less, it can closely adhere to a base material when made into the cured article. The fluorine atom content in the curable resin composition of the present embodiment is more preferably 3 to 25% by mass, even more preferably 5 to 25% by mass, and particularly preferably 7 to 25% by mass.

Note that the fluorine atom content in the curable resin composition can be measured by combustion ion chromatography analysis.

<Other Components>

Furthermore, what is called an additive such as a photosensitizer, an antioxidant, a surfactant, a leveling agent, a light stabilizer, or a filler may be added to the curable resin composition of the present embodiment as needed in a ratio that does not adversely affect the effects of the present invention. From the viewpoint of making the effects of the present invention excellent, the total content of the additives is preferably 10 parts by mass or less, more preferably 5 parts by mass or less, and even more preferably 1 part by mass or less with respect to 100 parts by mass of the curable resin composition.

(Photosensitizer)

When the curable resin composition of the present embodiment is cured by photopolymerization, various photosensitizers may be added together with the radical polymerization initiator. Examples of the photosensitizer include amines, ureas, sulfur-containing compounds, phosphorus-containing compounds, chlorine-containing compounds, nitriles, and other nitrogen-containing compounds. One of these may be used alone, or two or more may be used in combination. When these photosensitizers are added, the amount thereof added is preferably in a range of 0.01 to 10 parts by mass with respect to 100 parts by mass of the curable resin composition.

(Antioxidant)

An antioxidant may be added to the curable resin composition of the present embodiment for the purpose of improving heat resistance. Examples of the antioxidant include hindered phenolic compounds and hindered amine-based compounds. When these antioxidants are added, the amount thereof added is preferably in a range of 0.01 to 1 part by mass with respect to 100 parts by mass of the curable resin composition.

(Surfactant)

A surfactant may be added to the curable resin composition of the present embodiment for the purpose of improving coatability. Examples of the surfactant include fluorine-based surfactants, specifically perfluoroalkyl polyoxyethylene ethanol, fluorinated alkyl esters, perfluoroalkylamine oxides, and fluorine-containing organosiloxane-based compounds. When these surfactants are added, the amount thereof added is preferably in a range of 0.01 to 1 part by mass with respect to 100 parts by mass of the curable resin composition.

(Light Stabilizer)

For the light stabilizer, commercially available ones may be used, and examples thereof include TINUVIN (registered trademark) 123, 144, 152, 292, and 770 [manufactured by BASF Japan Ltd.] and ADK STAB (registered trademark) LA-52, LA-57, LA-63P, LA-68, LA-72, LA-77Y, LA-77G, LA-81, LA-82, and LA-87 [manufactured by Adeka Corporation].

[Preparation of Curable Resin Composition]

The method for preparing the curable resin composition of the present embodiment is not limited to a particular method so long as it is a method providing sufficient mixing of the components, and stirring and mixing by a stirring blade are generally preferred. The stirring time and the stirring speed may be determined as appropriate by the amount of each of the above components blended, and from the viewpoint of ensuring sufficient mixing, the stirring time may be 1 to 24 hours and the stirring speed may be 10 to 1,000 rpm.

From the viewpoint of improving coatability and improving transparency, it is preferable to remove foreign matter from the curable resin composition by using a filter. It is also preferable to remove air bubbles in the curable resin composition by a defoaming apparatus such as a vacuum pump.

The curable resin composition preferably has viscosity suitable for ease of handling, which is preferably in a range of, for example, 500 to 100,000 mPa·s at 25°C. It may also be further diluted with an organic solvent to prepare desired viscosity as described below.

[Curable Resin Varnish]

The curable resin composition of the present embodiment may be diluted with an organic solvent and made into a curable resin varnish for the purpose of improving coatability. The organic solvent is not limited to a particular organic solvent so long as it can dissolve the curable resin composition, and examples thereof include aromatic hydrocarbons,

ethers, alcohols, ketones, esters, and amides. Specific examples thereof include toluene, xylene, diethyl ether, dibutyl ether, tetrahydrofuran, 1,4-dioxane, methanol, ethanol, ethylene glycol, propylene glycol, acetone, methyl ethyl ketone, methyl acetate, ethyl acetate, γ-butyrolactone, ethylene carbonate, propylene carbonate, ethylene glycol monomethyl ether, ethylene glycol monoethyl ether, ethylene glycol monobutyl ether, ethylene glycol dimethyl ether, N,N-dimethylformamide, N,N-dimethylacetamide, and N-methylpyrrolidone. One of these may be used, or two or more may be used in combination.

(Cured Article)

The cured article of the present embodiment is obtained by curing the curable resin composition of the present embodiment. The cured article of the present embodiment is obtained by uniformly mixing the components described above, such as the radical polymerization initiator, in accordance with the purpose, and the cured article can be formed by the same method as conventionally known methods.

The cured article of the present embodiment has a refractive index of preferably 1.56 or less, more preferably 1.52 or less, and even more preferably 1.48 or less. When the refractive index of the cured article of the present embodiment is 1.56 or less, the refractive index difference with silicon dioxide can be reduced, and thus the cured article of the present embodiment can be suitably used for optical applications such as optical communication applications. The lower limit of the refractive index is not limited to a particular value, which is, for example, 1.36, and may be 1.46.

Note that in the present specification, the "refractive index" refers to a refractive index at 25°C, at a sodium D-line (589 nm), which can be measured using a refractometer (e.g., manufactured by Atago Co., Ltd.; Abbe refractometer).

The cured article of the present embodiment has a light absorption loss at 850 nm of preferably 0.2 dB/cm or less, and more preferably 0.1 dB/cm or less. The light absorption loss at 1,310 nm is preferably 0.4 dB/cm or less, and more preferably 0.2 dB/cm or less. The light absorption loss at 1,550 nm is preferably 0.6 dB/cm or less, and more preferably 0.4 dB/cm or less. When the light absorption loss at each wavelength of the cured article of the present embodiment is within the above range, the absorption in the near-infrared region used in light absorption loss optical communication is preferably low.

Note that the light absorption loss can be measured by the following procedure.

The absorbance of a specimen in a wavelength region of 400 to 2,000 nm is measured using a UV-Vis-NIR spectrophotometer (e.g., manufactured by JASCO Corporation, V-670). Note that the specimen is prepared by the method described in the examples described below. Since the decrease in light transmission at 800 nm matches reflected light intensity, the baseline is corrected such that the absorbance at 800 nm is zero, and the absorbance without the effect of reflection is calculated. By calculating the light absorption loss at 850 nm, 1,310 nm, and 1,550 nm from the following expression, the light absorption loss at each wavelength is measured.

$$\text{Light absorption loss (dB/cm)} = \text{absorbance} \times 2 \times 10$$

The cured article of the present embodiment has a 5% weight loss temperature (Td5) of preferably 300°C or higher, and more preferably 350°C or higher. When Td5 of the cured article of the present embodiment is 300°C or higher, it can withstand a solder reflow process because of its excellent heat resistance. The upper limit of Td5 is not limited to a particular temperature.

The 5% weight loss temperature (Td5) can be determined by performing measurement at a temperature increase rate of 20°C/min under a nitrogen flow of 20 mL/min using a TG-DTA apparatus (e.g., manufactured by Rigaku Corporation; TG-8120).

[Applications]

The cured article obtained by curing the curable resin composition of the present embodiment has excellent heat resistance, has low light absorption loss, and also has a low refractive index, and can thus be suitably used in components used in optoelectronic composite substrates, optical waveguides, right angle optical path converters, optical pins, microlenses, spot size converters, optical shuffling sheets, optical converters, optical adhesives, transparent sealants, and the like. Among these, it can be suitably used especially for optical waveguides.

(Optical Waveguide)

The optical waveguide of the present embodiment includes the cured article of the present embodiment. The optical waveguide of the present embodiment may include a base substrate, a cover, a mask, and the like apart from the cured article of the present embodiment.

The optical waveguide of the present embodiment can be formed using the curable resin composition of the present embodiment. When the optical waveguide is formed using the curable resin composition of the present embodiment, known and customary methods can be used. Usually, a curable resin layer is formed on a base substrate, then exposure and development treatment are performed, and thereby the optical waveguide can be formed.

The base material is not limited to a particular base substrate, and examples thereof include silicon wafers, glass wafers, quartz wafers, plastic circuit boards, and ceramic circuit boards.

As the method for forming the curable resin layer, it can be formed by applying it onto the base substrate by a method such as spin coating, dip coating, spraying, bar coating, roll coating, curtain coating, gravure coating, screen coating, or inkjet coating. The amount of curable resin composition applied may be selected as appropriate in accordance with the purpose. When the curable resin varnish is used, drying treatment may be performed after forming the curable resin layer as needed.

When the curable resin layer is cured by exposure, the exposure amount is preferably 0.01 to 10 J/$cm^2$. The exposure amount being within the above range makes curing progress sufficiently and can form fine patterns. In this process, it is preferable to perform exposure with light with a wavelength of 240 to 500 nm. Examples of the light with a wavelength of 240 to 500 nm include light of various wavelengths generated by a radiation generator, such as ultraviolet rays such as g-line and i-line and far ultraviolet rays (248 nm).

After the exposure treatment, development is performed using a developer. The developer is either an organic solvent-based developer or an alkaline developer, which may be used in combination.

Examples of the organic solvent-based developer include isopropyl alcohol, propylene glycol monomethyl ether, and propylene glycol monomethyl ether acetate.

For the alkaline developer, for example, an alkali metal hydroxide, an alkali metal carbonate, an alkali metal pyrophosphate, a sodium salt, an ammonium salt, an organic salt, or the like can be used as a base.

[Examples]

The following describes examples of the present invention more specifically, but the present invention is not limited to these examples.

[Method of Evaluation]

<Evaluation of Light Absorption Loss>

The curable resin composition was poured into a fluororubber O-ring placed on a glass plate, and a glass plate was placed from above such that no bubbles were taken in. The curable resin composition was irradiated with an integrated light of 3,000 mJ/$cm^2$ by a high-pressure mercury lamp under a nitrogen atmosphere to make a cured article. The cured article was peeled off from the glass plates and the O-ring to obtain a 20-mm diameter, 5-mm thick specimen.

The absorbance of the specimen in a wavelength region of 400 to 2,000 nm was measured using a UV-Vis-NIR spectrophotometer (manufactured by JASCO Corporation, V-670). Since the decrease in light transmission at 800 nm matches reflected light intensity, the baseline was corrected such that the absorbance at 800 nm was zero, and the absorbance without the effect of reflection was calculated. Light absorption loss at 850 nm, 1,310 nm, and 1,550 nm was calculated from the following expression.

$$\text{Light absorption loss (dB/cm)} = \text{absorbance} \times 2 \times 10$$

<Evaluation of Refractive Index>

For a specimen prepared in the same manner as in <Evaluation of Light Absorption Loss> above, the refractive index at a sodium D-line (589 nm) was measured using an Abbe refractometer manufactured by Atago Co., Ltd.

<Evaluation of Heat Resistance>

Using a TG-DTA apparatus (manufactured by Rigaku Corporation, TG-8120), measurement was performed at a temperature increase rate of 20°C/minute under a nitrogen flow of 20 mL/minute to measure a 5% weight loss temperature (Td5).

<Evaluation of Weight Average Molecular Weight>

Measurement was performed using the following measurement apparatus and measurement conditions to measure the weight average molecular weight.

Measurement apparatus: "HLC-8320 GPC" manufactured by Tosoh Corporation
Column: Guard column "HXL-L" manufactured by Tosoh Corporation + "TSK-GEL G2000HXL" manufactured by Tosoh Corporation + "TSK-GEL G2000HXL" manufactured by Tosoh Corporation + "TSK-GEL G3000HXL" manufactured by Tosoh Corporation + "TSK-GEL G4000HXL" manufactured by Tosoh Corporation
Detector: RI (differential refractometer)
Data processing: "GPC Workstation EcoSEC-WorkStation" manufactured by Tosoh Corporation
Measurement conditions: Column temperature 40°C

Developing solvent: tetrahydrofuran
Flow rate: 1.0 mL/minute

Standard: The following monodispersed polystyrenes of known molecular weights were used in conformity with the measurement manual of the "GPC Workstation EcoSEC-WorkStation."
(Polystyrenes Used)
"A-500" manufactured by Tosoh Corporation
"A-1000" manufactured by Tosoh Corporation
"A-2500" manufactured by Tosoh Corporation
"A-5000" manufactured by Tosoh Corporation
"F-1" manufactured by Tosoh Corporation
"F-2" manufactured by Tosoh Corporation
"F-4" manufactured by Tosoh Corporation
"F-10" manufactured by Tosoh Corporation
"F-20" manufactured by Tosoh Corporation
"F-40" manufactured by Tosoh Corporation
"F-80" manufactured by Tosoh Corporation
"F-128" manufactured by Tosoh Corporation

(Production Example 1)

Charged into a 2 L flask equipped with a thermometer, a cooling tube, and a stirrer were 216.3 g (1 mol) of diphenylsilanediol, 124.2 g (0.5 mol) of 3-(methacryloyloxy)propyltrimethoxysilane, 109.1 g (0.5 mol) of 3,3,3-trifluoropropyltrimethoxysilane, and 283.0 g toluene, and the mixture was heated to 50°C with stirring. Next, 0.38 g of barium hydroxide monohydrate was added thereto, and the mixture was reacted at 50°C for 20 hours. After the end of the reaction, the resulting reaction mixture was cooled to room temperature and filtered through a membrane filter with a pore size of 0.2 μm. Using a rotary evaporator, the toluene and methanol as a byproduct were removed under reduced pressure. A polysiloxane (A1) with a weight average molecular weight of 2,900 having a methacryloyl group was obtained.

(Production Example 2)

Synthesis was performed in the same manner as in Production Example 1 except that the amount 124.2 g (0.5 mol) of 3-(methacryloyloxy)propyltrimethoxysilane in Production Example 1 was changed to 235.9 g (0.95 mol), and the amount 109.1 g (0.5 mol) of 3,3,3-trifluoropropyltrimethoxysilane was changed to 10.9 g (0.05 mol) to obtain a polysiloxane (A2) with a weight average molecular weight of 2,700 having a methacryloyl group.

(Production Example 3)

Synthesis was performed in the same manner as in Production Example 1 except that 216.3 g (1 mol) of diphenylsilanediol in Production Example 1 was changed to 92.2 g (0.5 mol) of dimethylhydroxysilane, the amount 124.2 g (0.5 mol) of 3-(methacryloyloxy)propyltrimethoxysilane was changed to 12.4 g (0.05 mol), and the amount 109.1 g (0.5 mol) of 3,3,3-trifluoropropyltrimethoxysilane was changed to 207.3 g (0.95 mol) to obtain a polysiloxane (A3) with a weight average molecular weight of 3,000 having a methacryloyl group.

(Production Example 4)

Synthesis was performed in the same manner as in Production Example 1 except that 124.2 g (0.5 mol) of 3-(methacryloyloxy)propyltrimethoxysilane in Production Example 1 was changed to 117.2 g (0.5 mol) of 3-(acryloyloxy) propyltrimethoxysilane to obtain a polysiloxane (A4) with a weight average molecular weight of 2,800 having an acryloyl group.

(Production Example 5)

Synthesis was performed in the same manner as in Production Example 1 except that 124.2 g (0.5 mol) of 3-(methacryloyloxy)propyltrimethoxysilane in Production Example 1 was changed to 112.2 g (0.5 mol) of p-styryltrimethoxysilane to obtain a polysiloxane (A5) with a weight average molecular weight of 2,800 having a styryl group.

(Production Example 6)

Synthesis was performed in the same manner as in Production Example 1 except that the amount 216.3 g (1 mol) of diphenylsilanediol in Production Example 1 was changed to 194.7 g (0.9 mol) to obtain a polysiloxane (A6) with a weight average molecular weight of 2,600 having a methacryloyl group.

(Production Example 7)

Synthesis was performed in the same manner as in Production Example 1 except that the amount 216.3 g (1 mol) of diphenylsilanediol in Production Example 1 was changed to 324.5 g (1.5 mol) to obtain a polysiloxane (A7) with a weight average molecular weight of 3,600 having a methacryloyl group.

(Production Example 8)

Charged into a 200 mL flask equipped with a thermometer, a cooling tube, and a stirrer were 24.06 g of 4-phenoxyphenol, 96.23 g of dichloromethane, and 15.69 g of triethylamine, and the mixture was cooled to 0°C in an ice bath with stirring. Next, 14.03 g of acryloyl chloride was added dropwise thereto over 5 hours. Next, the mixture was returned to room temperature, 25°C, and was reacted for another 5 hours. Next, the stirring was stopped, and the reaction liquid was washed with pure water 10 times. Subsequently, dichloromethane was distilled off from the reaction liquid under reduced pressure using an evaporator to obtain an acrylic acid derivative (B-1-1) of the following structural formula.

[Chemical Formula 13]

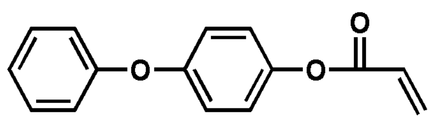

(Production Example 9)

Synthesis was performed in the same manner as in Production Example 8 except that 24.06 g of 4-phenoxyphenol in Production Example 8 was changed to 23.80 g of 4-benzylphenol to obtain an acrylic acid derivative (B-1-2) of the following structural formula.

[Chemical Formula 14]

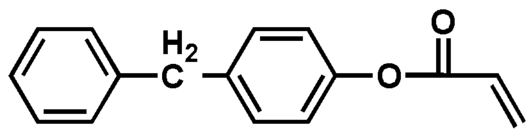

(Production Example 10)

Synthesis was performed in the same manner as in Production Example 8 except that 24.06 g of 4-phenoxyphenol in Production Example 8 was changed to 21.99 g of ortho-phenylphenol to obtain an acrylic acid derivative (B-1-3) of the following structural formula.

[Chemical Formula 15]

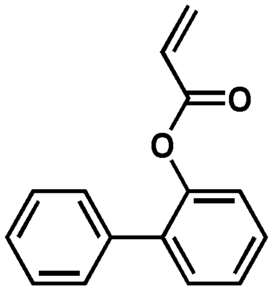

(Production Example 11)

Synthesis was performed in the same manner as in Production Example 8 except that 24.06 g of 4-phenoxyphenol in Production Example 8 was changed to 23.80 g of [1,1'-biphenyl]-3-methanol to obtain an acrylic acid derivative (B-1-4) of the following structural formula.

[Chemical Formula 16]

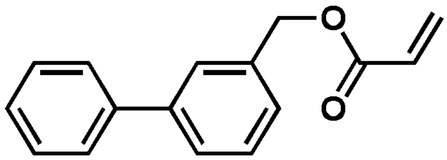

(Production Example 12)

Synthesis was performed in the same manner as in Production Example 8 except that 24.06 g of 4-phenoxyphenol in Production Example 8 was changed to 25.87 g of 3-phenoxybenzyl alcohol to obtain an acrylic acid derivative (B-1-5) of the following structural formula.

[Chemical Formula 17]

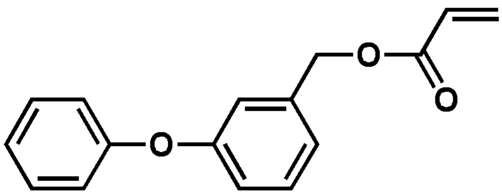

(Production Example 13)

Synthesis was performed in the same manner as in Production Example 8 except that 24.06 g of 4-phenoxyphenol in Production Example 8 was changed to 27.68 g of ortho-phenylphenoxyethanol to obtain an acrylic acid derivative (B-1-6) of the following structural formula.

[Chemical Formula 18]

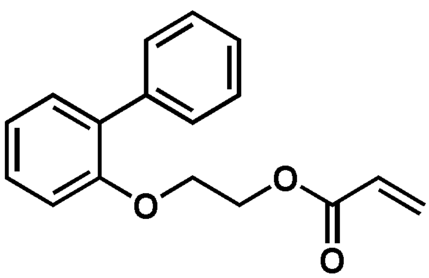

(Production Example 14)

Synthesis was performed in the same manner as in Production Example 8 except that 24.06 g of 4-phenoxyphenol in Production Example 8 was changed to 23.81 g of diphenylmethanol to obtain an acrylic acid derivative (B-1-7) of the following structural formula.

[Chemical Formula 19]

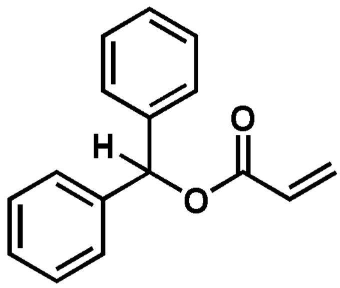

(Production Example 15)

Synthesis was performed in the same manner as in Production Example 8 except that 24.06 g of 4-phenoxyphenol in Production Example 8 was changed to 25.62 g of 1,1-diphenylethanol to obtain an acrylic acid derivative (B-1-8) of the following structural formula.

[Chemical Formula 20]

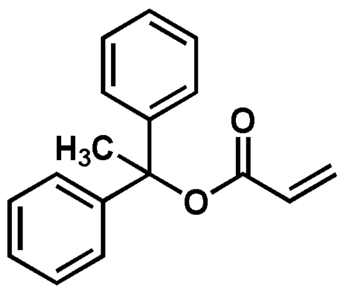

(Production Example 16)

Synthesis was performed in the same manner as in Production Example 8 except that 24.06 g of 4-phenoxyphenol in Production Example 8 was changed to 20.44 g of 1-naphthalenemethanol to obtain an acrylic acid derivative (B-1-9) of the following structural formula.

[Chemical Formula 21]

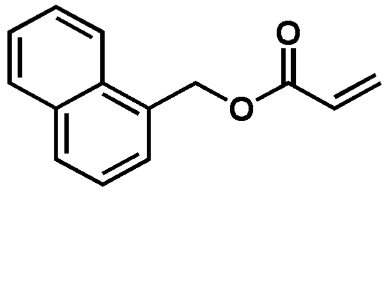

(Production Example 17)

Synthesis was performed in the same manner as in Production Example 8 except that 24.06 g of 4-phenoxyphenol in Production Example 8 was changed to 12.03 g of 2,2'-biphenol to obtain an acrylic acid derivative (B-1-10) of the following structural formula.

[Chemical Formula 22]

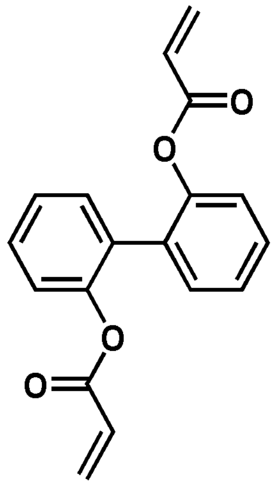

(Production Example 18)

Synthesis was performed in the same manner as in Production Example 8 except that 24.06 g of 4-phenoxyphenol in Production Example 8 was changed to 13.84 g of 1,1-diphenyl-1,2-ethanediol to obtain an acrylic acid derivative (B-1-11) of the following structural formula.

[Chemical Formula 23]

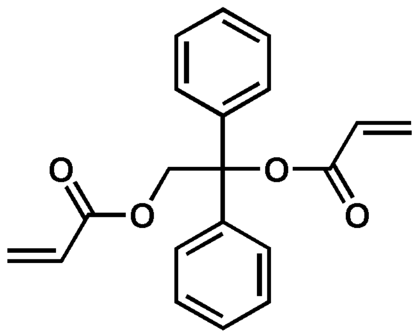

(Production Example 19)

Synthesis was performed in the same manner as in Production Example 8 except that 24.06 g of 4-phenoxyphenol in Production Example 8 was changed to 12.16 g of 1,5-naphthalenedimethanol to obtain an acrylic acid derivative (B-1-12) of the following structural formula.

[Chemical Formula 24]

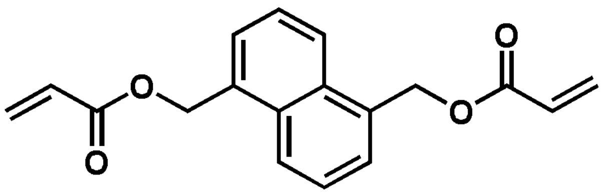

(Production Example 20)

Synthesis was performed in the same manner as in Production Example 8 except that 14.03 g of acryloyl chloride in Production Example 8 was changed to 16.20 g of methacryloyl chloride to obtain an acrylic acid derivative (B-1-13) of the following structural formula.

[Chemical Formula 25]

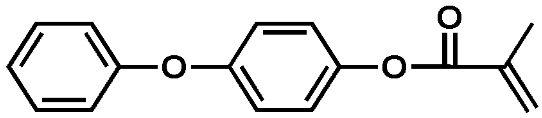

(Production Example 21)

Synthesis was performed in the same manner as in Production Example 8 except that 24.06 g of 4-phenoxyphenol in Production Example 8 was changed to 26.38 g of 3-fluoro-4-phenoxyphenol to obtain an acrylic acid derivative (B-2-1) of the following structural formula.

[Chemical Formula 26]

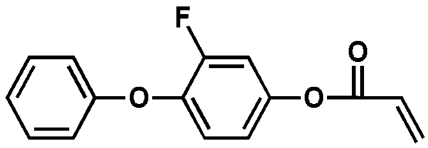

(Production Example 22)

Synthesis was performed in the same manner as in Production Example 8 except that 24.06 g of 4-phenoxyphenol in Production Example 8 was changed to 28.45 g of 2,6-difluoro-4-(phenylmethyl)phenol to obtain an acrylic acid derivative (B-2-2) of the following structural formula.

[Chemical Formula 27]

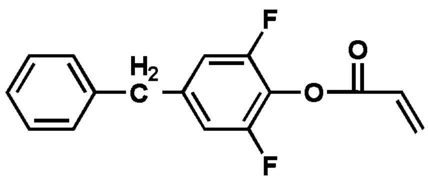

(Production Example 23)

Synthesis was performed in the same manner as in Production Example 8 except that 24.06 g of 4-phenoxyphenol in Production Example 8 was changed to 24.32 g of 3-fluoro[1,1'-biphenyl]-4-ol to obtain an acrylic acid derivative (B-2-3) of the following structural formula.

[Chemical Formula 28]

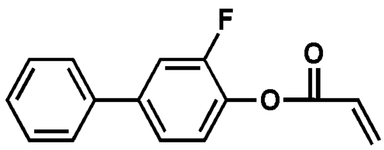

(Production Example 24)

Synthesis was performed in the same manner as in Production Example 8 except that 24.06 g of 4-phenoxyphenol in Production Example 8 was changed to 26.13 g of 2-fluoro[1,1'-biphenyl]-4-methanol to obtain an acrylic acid derivative (B-2-4) of the following structural formula.

[Chemical Formula 29]

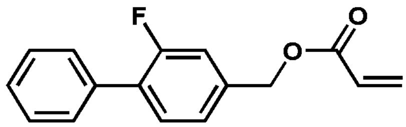

(Production Example 25)

Synthesis was performed in the same manner as in Production Example 8 except that 24.06 g of 4-phenoxyphenol in Production Example 8 was changed to 48.60 g of 2-[(2,2',3,3',4',5,5',6,6'-nonafluoro[1,1'-biphenyl]-4-yl)oxy]ethanol to obtain an acrylic acid derivative (B-2-5) of the following structural formula.

[Chemical Formula 30]

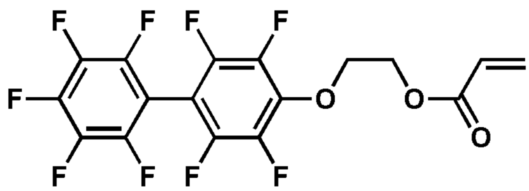

(Production Example 26)

Synthesis was performed in the same manner as in Production Example 8 except that 24.06 g of 4-phenoxyphenol in Production Example 8 was changed to 26.13 g of 3-fluoro-α-phenylbenzenemethanol to obtain an acrylic acid derivative (B-2-6) of the following structural formula.

[Chemical Formula 31]

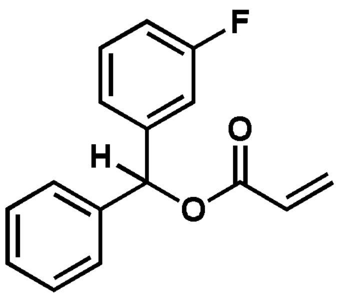

(Production Example 27)

Synthesis was performed in the same manner as in Production Example 8 except that 24.06 g of 4-phenoxyphenol in Production Example 8 was changed to 27.94 g of 3-fluoro-α-methyl-α-phenylbenzenemethanol to obtain an acrylic acid derivative (B-2-7) of the following structural formula.

[Chemical Formula 32]

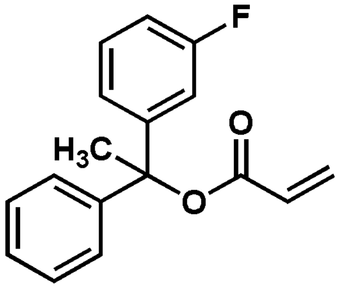

(Production Example 28)

Synthesis was performed in the same manner as in Production Example 8 except that 24.06 g of 4-phenoxyphenol in Production Example 8 was changed to 22.77 g of 8-fluoro-2-naphthalenemethanol to obtain an acrylic acid derivative (B-2-8) of the following structural formula.

[Chemical Formula 33]

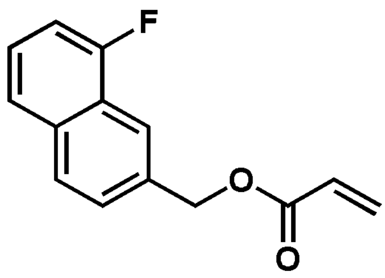

(Production Example 29)

Synthesis was performed in the same manner as in Production Example 8 except that 24.06 g of 4-phenoxyphenol in Production Example 8 was changed to 23.78 g of pentafluorophenol to obtain an acrylic acid derivative (B-2-9) of the following structural formula.

[Chemical Formula 34]

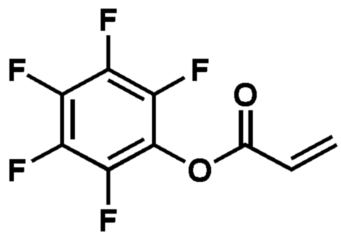

(Production Example 30)

Synthesis was performed in the same manner as in Production Example 8 except that 24.06 g of 4-phenoxyphenol in Production Example 8 was changed to 13.19 g of 5-fluoro[1,1'-biphenyl]-2,2'-diol to obtain an acrylic acid derivative (B-2-10) of the following structural formula.

[Chemical Formula 35]

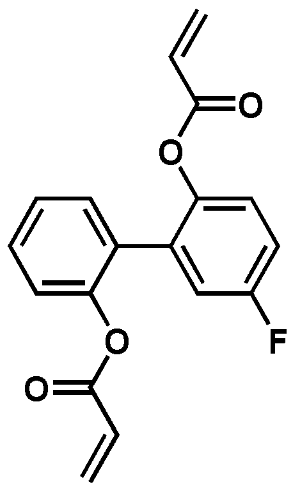

(Production Example 31)

Synthesis was performed in the same manner as in Production Example 8 except that 24.06 g of 4-phenoxyphenol in Production Example 8 was changed to 16.17 g of 1-(3,5-difluorophenyl)-1-phenyl-1,2-ethanediol to obtain an acrylic acid derivative (B-2-11) of the following structural formula.

[Chemical Formula 36]

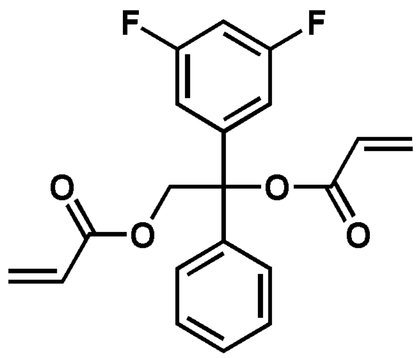

(Production Example 32)

Synthesis was performed in the same manner as in Production Example 8 except that 24.06 g of 4-phenoxyphenol in Production Example 8 was changed to 19.13 g of 1,3,4,5,7,8-hexafluoro-2,6-naphthalenedimethanol to obtain an acrylic acid derivative (B-2-12) of the following structural formula.

[Chemical Formula 37]

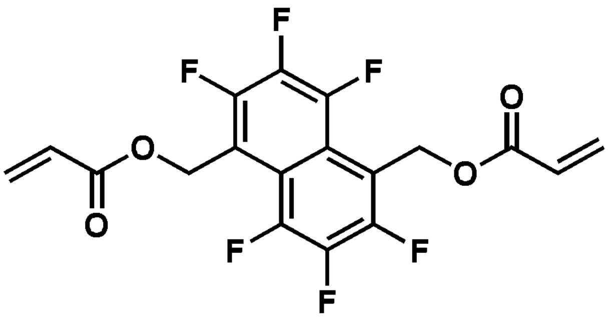

(Production Example 33)

Synthesis was performed in the same manner as in Production Example 8 except that 24.06 g of 4-phenoxyphenol in Production Example 8 was changed to 23.53 g of tetrafluorohydroquinone to obtain an acrylic acid derivative (B-2-13) of the following structural formula.

[Chemical Formula 38]

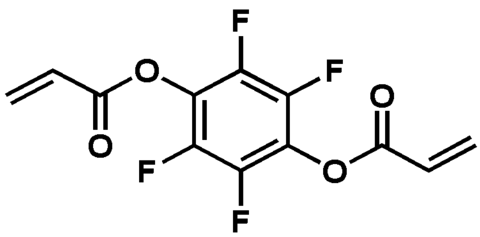

(Production Example 34)

Synthesis was performed in the same manner as in Production Example 8 except that 24.06 g of 4-phenoxyphenol in Production Example 8 was changed to 30.24 g of 2,3,5,6-tetrafluoro-4-(trifluoromethyl)phenol to obtain an acrylic acid derivative (B-2-14) of the following structural formula.

[Chemical Formula 39]

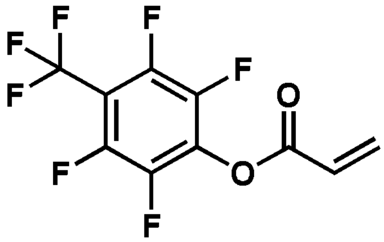

(Production Example 35)

Synthesis was performed in the same manner as in Production Example 8 except that 14.03 g of acryloyl chloride in Production Example 8 was changed to 16.20 g of methacryloyl chloride, and further 24.06 g of 4-phenoxyphenol was changed to 26.38 g of 3-fluoro-4-phenoxyphenol to obtain a methacrylic acid derivative (B-2-15) of the following structural formula.

[Chemical Formula 40]

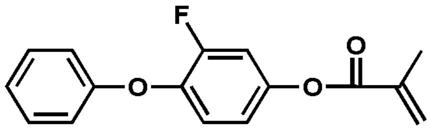

(Comparative Production Example 1)

Synthesis was performed in the same manner as in Production Example 1 except that 109.1 g (0.5 mol) of 3,3,3-trifluoropropyltrimethoxysilane in Production Example 1 was changed to 99.1 g (0.5 mol) of phenyltrimethoxysilane to obtain a fluorine atom-free polysiloxane (a comparative component (A), A8) with a weight average molecular weight of 2,800 having a methacryloyl group.

Using the above polysiloxanes (A1) to (A8) as polysiloxane resins, the above acrylic acid derivatives (B-1-1) to (B-1-13) as fluorine atom-free (meth)acrylic acid derivatives, the above acrylic acid derivatives (B-2-1) to (B-2-15) and 2,2,2-trifluoroethyl acrylate as fluorine atom-containing (meth)acrylic acid derivatives, and 2-hydroxy-2-methyl-1-phenylpropan-1-one (HMPP) as a radical polymerization initiator, curable resin compositions were prepared in accordance with the formulations in Tables 1 to 4 below and evaluated.

Note that in Comparative Example 4, benzyl acrylate (a comparative component (B)) was used instead of the component (B) (the (meth)acrylic acid derivative) obtained in the above production examples.

[Table 1]

| | | | Comp. Example | | | | Example | | | | | | |
|---|---|---|---|---|---|---|---|---|---|---|---|---|---|
| | | | 1 | 2 | 3 | 4 | 1 | 2 | 3 | 4 | 5 | 6 | 7 |
| Resin composition (parts by mass) | Component (A) | (A1) | 100 | | | 50 | 80 | 50 | 50 | | | | |
| | | (A2) | | | | | | | | 50 | | | |
| | | (A3) | | | | | | | | | 70 | | |
| | | (A4) | | | | | | | | | | 50 | |
| | | (A5) | | | | | | | | | | | 50 |
| | | (A6) | | | | | | | | | | | |
| | | (A7) | | | | | | | | | | | |
| | Comp. component (A) | (A8) | | 50 | 80 | | | | | | | | |
| | Component (B) | 2,2,2-Trifluoroethyl acrylate | | | 20 | | 20 | | 20 | 20 | 10 | 20 | 20 |
| | | (B-1-1) | | 50 | | | | 50 | | | | | |
| | | (B-1-2) | | | | | | | | | | | |
| | | (B-1-3) | | | | | | | | | | | |
| | | (B-1-4) | | | | | | | | | | | |
| | | (B-1-5) | | | | | | | | | | | |
| | | (B-1-6) | | | | | | | | | | | |
| | | (B-1-7) | | | | | | | | | | | |
| | | (B-1-8) | | | | | | | | | | | |
| | | (B-1-9) | | | | | | | | | | | |
| | | (B-1-10) | | | | | | | 30 | 30 | 20 | 30 | 30 |
| | Comp. component (B) | Benzyl acrylate | | | | 50 | | | | | | | |
| | Component (C) | HMPP | 1 | 1 | 1 | 1 | 1 | 1 | 1 | 1 | 1 | 1 | 1 |
| Fluorine atom content in component (A) (% by mass) | | | 7.9 | 0 | 0 | 7.9 | 7.9 | 7.9 | 7.9 | 0.8 | 24.1 | 8.0 | 8.1 |
| Cured article characteristics | Light absorption loss (dB/cm) | 850 nm | 0.10 | 0.10 | 0.09 | 0.21 | 0.09 | 0.08 | 0.09 | 0.09 | 0.09 | 0.08 | 0.10 |
| | | 1,310 nm | 0.22 | 0.20 | 0.19 | 0.72 | 0.19 | 0.15 | 0.17 | 0.19 | 0.16 | 0.15 | 0.15 |
| | | 1,550 nm | 0.48 | 0.38 | 0.38 | 0.94 | 0.35 | 0.38 | 0.39 | 0.40 | 0.37 | 0.37 | 0.35 |
| | Refractive index | | 1.538 | 1.578 | 1.541 | 1.563 | 1.507 | 1.559 | 1.507 | 1.537 | 1.439 | 1.507 | 1.534 |
| | 5% weight loss temperature (°C) | | 280 | 350 | 250 | 325 | 355 | 360 | 360 | 360 | 350 | 360 | 430 |

[Table 2]

| | | | Example | | | | | | | | | | |
|---|---|---|---|---|---|---|---|---|---|---|---|---|---|
| | | | 8 | 9 | 10 | 11 | 12 | 13 | 14 | 15 | 16 | 17 | 18 |
| Resin composition (parts by mass) | Component (A) | (A1) | | | 50 | 50 | 50 | 50 | 50 | 50 | 50 | 50 | 50 |
| | | (A2) | | | | | | | | | | | |
| | | (A3) | | | | | | | | | | | |
| | | (A4) | | | | | | | | | | | |
| | | (A5) | | | | | | | | | | | |
| | | (A6) | 50 | | | | | | | | | | |
| | | (A7) | | 50 | | | | | | | | | |
| | Comp. component (A) | (A8) | | | | | | | | | | | |
| | Component (B) | 2,2,2-Trifluoroethyl acrylate | 20 | 20 | | | | | | | | | |
| | | (B-1-1) | | | | | | | | | | | |
| | | (B-1-2) | | | 50 | | | | | | | | |
| | | (B-1-3) | | | | 50 | | | | | | | |
| | | (B-1-4) | | | | | 50 | | | | | | |
| | | (B-1-5) | | | | | | 50 | | | | | |
| | | (B-1-6) | | | | | | | 50 | | | | |
| | | (B-1-7) | | | | | | | | 50 | | | |
| | | (B-1-8) | | | | | | | | | 50 | | |
| | | (B-1-9) | | | | | | | | | | 50 | |
| | | (B-1-10) | 30 | 30 | | | | | | | | | 50 |
| | Comp. component (B) | Benzyl acrylate | | | | | | | | | | | |
| | Component (C) | HMPP | 1 | 1 | 1 | 1 | 1 | 1 | 1 | 1 | 1 | 1 | 1 |
| Fluorine atom content in component (A) (% by mass) | | | 8.3 | 6.2 | 7.9 | 7.9 | 7.9 | 7.9 | 7.9 | 7.9 | 7.9 | 7.9 | 7.9 |
| Cured article characteristics | Light absorption loss (dB/cm) | 850 nm | 0.10 | 0.09 | 0.10 | 0.09 | 0.08 | 0.07 | 0.10 | 0.09 | 0.10 | 0.05 | 0.10 |
| | | 1,310 nm | 0.18 | 0.16 | 0.22 | 0.20 | 0.19 | 0.20 | 0.31 | 0.19 | 0.22 | 0.20 | 0.20 |
| | | 1,550 nm | 0.40 | 0.37 | 0.47 | 0.37 | 0.38 | 0.36 | 0.58 | 0.38 | 0.52 | 0.37 | 0.38 |
| | Refractive index | | 1.519 | 1.524 | 1.553 | 1.557 | 1.555 | 1.552 | 1.550 | 1.557 | 1.556 | 1.559 | 1.559 |
| | 5% weight loss temperature (°C) | | 350 | 380 | 360 | 355 | 350 | 365 | 350 | 350 | 355 | 370 | 380 |

[Table 3]

| | | | Example | | | | | | | | | | | |
|---|---|---|---|---|---|---|---|---|---|---|---|---|---|---|
| | | | 19 | 20 | 21 | 22 | 23 | 24 | 25 | 26 | 27 | 28 | 29 | 30 |
| Resin composition (parts by mass) | Component (A) | (A1) | 50 | 50 | 50 | 50 | 50 | 50 | 50 | 50 | 70 | 50 | 50 | 50 |
| | | (A2) | | | | | | | | | | | | |
| | | (A3) | | | | | | | | | | | | |
| | | (A4) | | | | | | | | | | | | |
| | | (A5) | | | | | | | | | | | | |
| | | (A6) | | | | | | | | | | | | |
| | | (A7) | | | | | | | | | | | | |
| | Comp. component (A) | (A8) | | | | | | | | | | | | |
| | Component (B) | (B-1-10) | | | | | 25 | | | | | | | |
| | | (B-1-11) | 50 | | | | | | | | | | | |
| | | (B-1-12) | | 50 | | | | | | | | | | |
| | | (B-1-13) | | | 50 | | | | | | | | | |
| | | (B-2-1) | | | | 50 | 25 | | | | | | | |
| | | (B-2-2) | | | | | | 50 | | | | | | |
| | | (B-2-3) | | | | | | | 50 | | | | | |
| | | (B-2-4) | | | | | | | | 50 | | | | |
| | | (B-2-5) | | | | | | | | | 30 | | | |
| | | (B-2-6) | | | | | | | | | | 50 | | |
| | | (B-2-7) | | | | | | | | | | | 50 | |
| | | (B-2-8) | | | | | | | | | | | | 50 |
| | | (B-2-9) | | | | | | | | | | | | |
| | | (B-2-10) | | | | | | | | | | | | |
| | | (B-2-11) | | | | | | | | | | | | |
| | | (B-2-12) | | | | | | | | | | | | |
| | | (B-2-13) | | | | | | | | | | | | |
| | | (B-2-14) | | | | | | | | | | | | |
| | | (B-2-15) | | | | | | | | | | | | |
| | Component (C) | HMPP | 1 | 1 | 1 | 1 | 1 | 1 | 1 | 1 | 1 | 1 | 1 | 1 |
| Fluorine atom content in component (A) (% by mass) | | | 7.9 | 7.9 | 7.9 | 7.9 | 7.9 | 7.9 | 7.9 | 7.9 | 7.9 | 7.9 | 7.9 | 7.9 |
| Cured article characteristics | Light absorption loss (dB/cm) | 850 nm | 0.10 | 0.09 | 0.08 | 0.08 | 0.10 | 0.10 | 0.09 | 0.08 | 0.07 | 0.09 | 0.10 | 0.10 |
| | | 1,310 nm | 0.20 | 0.20 | 0.19 | 0.14 | 0.18 | 0.20 | 0.21 | 0.23 | 0.19 | 0.19 | 0.29 | 0.21 |
| | | 1,550 nm | 0.36 | 0.37 | 0.38 | 0.37 | 0.38 | 0.42 | 0.36 | 0.38 | 0.31 | 0.36 | 0.48 | 0.48 |
| | Refractive index | | 1.554 | 1.558 | 1.553 | 1.534 | 1.547 | 1.513 | 1.532 | 1.534 | 1.478 | 1.534 | 1.536 | 1.530 |
| | 5% weight loss temperature (°C) | | 357 | 385 | 340 | 360 | 375 | 355 | 355 | 350 | 350 | 350 | 350 | 355 |

[Table 4]

| | | | Example | | | | | | | | | | | |
|---|---|---|---|---|---|---|---|---|---|---|---|---|---|---|
| | | | 31 | 32 | 33 | 34 | 35 | 36 | 37 | 38 | 39 | 40 | 41 | 42 |
| Resin composition (parts by mass) | Component (A) | (A1) | 70 | 50 | 50 | 70 | 70 | 70 | 50 | 99.5 | 99 | 70 | 10 | 5 |
| | | (A2) | | | | | | | | | | | | |
| | | (A3) | | | | | | | | | | | | |
| | | (A4) | | | | | | | | | | | | |
| | | (A5) | | | | | | | | | | | | |
| | | (A6) | | | | | | | | | | | | |
| | | (A7) | | | | | | | | | | | | |
| | Comp. component (A) | (A8) | | | | | | | | | | | | |
| | Component (B) | (B-1-10) | | | | | | | | | | | | |
| | | (B-1-11) | | | | | | | | | | | | |
| | | (B-1-12) | | | | | | | | | | | | |
| | | (B-1-13) | | | | | | | | | | | | |
| | | (B-2-1) | | | | | | | | | | | | |
| | | (B-2-2) | | | | | | | | | | | | |
| | | (B-2-3) | | | | | | | | | | | | |
| | | (B-2-4) | | | | | | | | | | | | |
| | | (B-2-5) | | | | | | | | | | | | |
| | | (B-2-6) | | | | | | | | | | | | |
| | | (B-2-7) | | | | | | | | | | | | |
| | | (B-2-8) | | | | | | | | | | | | |
| | | (B-2-9) | 30 | | | | | | | | | | | |
| | | (B-2-10) | | 50 | | | | | | | | | | |
| | | (B-2-11) | | | 50 | | | | | | | | | |
| | | (B-2-12) | | | | 30 | | | | | | | | |
| | | (B-2-13) | | | | | 30 | | | | | | | |

(continued)

| | | | Example | | | | | | | | | | | |
|---|---|---|---|---|---|---|---|---|---|---|---|---|---|---|
| | | | 31 | 32 | 33 | 34 | 35 | 36 | 37 | 38 | 39 | 40 | 41 | 42 |
| | | (B-2-14) | | | | | | 30 | | | | | | |
| | | (B-2-15) | | | | | | | 50 | 0.5 | 1 | 30 | 90 | 95 |
| | Component (C) | HMPP | 1 | 1 | 1 | 1 | 1 | 1 | 1 | 1 | 1 | 1 | 1 | 1 |
| Fluorine atom content in component (A) (% by mass) | | | 7.9 | 7.9 | 7.9 | 7.9 | 7.9 | 7.9 | 7.9 | 7.9 | 7.9 | 7.9 | 7.9 | 7.9 |
| Cured article characteristics | Light absorption loss (dB /cm ) | 850 nm | 0.0 5 | 0.1 0 | 0.1 0 | 0.0 9 | 0.1 0 | 0.1 0 | 0.0 8 | 0.1 0 | 0.0 9 | 0.0 8 | 0.0 9 | 0.1 0 |
| | | 1,310 nm | 0.1 8 | 0.2 0 | 0.2 0 | 0.1 9 | 0.1 8 | 0.1 9 | 0.2 2 | 0.2 2 | 0.2 2 | 0.2 0 | 0.2 2 | 0.2 3 |
| | | 1,550 nm | 0.3 4 | 0.3 7 | 0.3 5 | 0.3 3 | 0.3 4 | 0.3 1 | 0.4 2 | 0.4 7 | 0.4 7 | 0.4 0 | 0.4 1 | 0.4 1 |
| | Refractive index | | 1.4 69 | 1.5 34 | 1.5 19 | 1.4 89 | 1.4 84 | 1.4 60 | 1.5 34 | 1.5 38 | 1.5 38 | 1.5 36 | 1.5 31 | 1.5 31 |
| | 5% weight loss temperature (°C) | | 370 | 380 | 357 | 385 | 380 | 380 | 340 | 300 | 310 | 345 | 325 | 320 |

From Tables 1 to 4 above, the curable resin compositions of Examples 1 to 42, when made into cured articles, had excellent heat resistance due to their high 5% weight loss temperature, had a low light absorption loss, and further had a low refractive index.

On the other hand, Comparative Example 1 had a low 5% weight loss temperature because it did not contain a (meth)acrylic acid derivative. Comparative Example 2 had a high refractive index because the polysiloxane resin did not contain a fluorine atom. Comparative Example 3, which is an example in which the polysiloxane resin does not contain a fluorine atom, had a low 5% weight loss temperature. Comparative Example 4 had a high light absorption loss because benzyl acrylate was used instead of the component (B) (the (meth)acrylic acid derivative).

## Claims

1. A curable resin composition comprising components (A) to (C) below:

(A) a polysiloxane resin having one or more reactive groups selected from the group consisting of a (meth)acryloyl group and a styryl group, and a fluorine atom-containing organic group;

(B) a fluorine atom-free (meth)acrylic acid derivative (B-1) having a structure represented by General Formula (1) below and/or a fluorine atom-containing (meth)acrylic acid derivative (B-2) having a structure represented by General Formula (2) below:

[Chemical Formula 1]

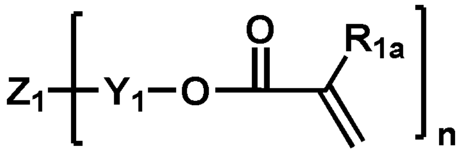

(1)

in General Formula (1) above, $R_{1a}$ is a hydrogen atom or a methyl group; $Y_1$ is any one of a single bond, a methylene group, and an oxyethylene group; $Z_1$ is any one of General Formulae (1-1) to (1-6) below; and n indicates 1 or 2, in which when n is 2, a plurality of $R_{1a}$ and $Y_1$ are optionally same or different,

[Chemical Formula 2]

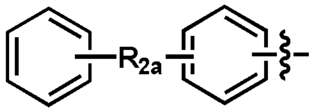

(1-1)

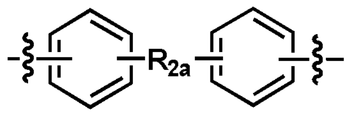

(1-4)

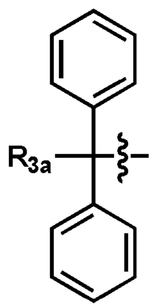

(1-2)

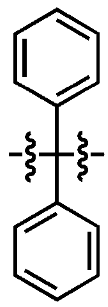

(1-5)

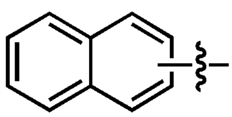

(1-3)

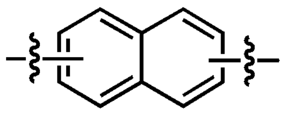

(1-6)

in General Formulae (1-1) and (1-4) above, $R_{2a}$ is a single bond, an oxygen atom, or a methylene group; and in General Formula (1-2) above, $R_{3a}$ indicates a hydrogen atom or a methyl group,

[Chemical Formula 3]

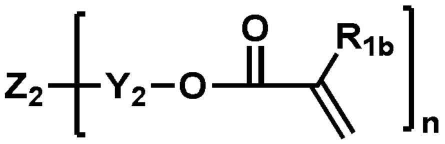

(2)

in General Formula (2) above, $R_{1b}$ is a hydrogen atom or a methyl group; $Y_2$ is a single bond, a $C_{1-9}$ alkylene group, or a fluorine atom-containing $C_{1-9}$ alkylene group; $Z_2$ is any one of a single bond, a hydrogen atom, a fluorine atom, and General Formulae (2-1) to (2-8) below; and n indicates 1 or 2,
in General Formula (2) above, when $Y_2$ is a single bond or a $C_{1-9}$ alkylene group, $Z_2$ is any one of a fluorine atom and General Formulae (2-1) to (2-8) below, and when $Y_2$ is a fluorine atom-containing $C_{1-9}$ alkylene group, $Z_2$ is any one of a single bond, a hydrogen atom, a fluorine atom, and General Formulae (2-1) to (2-8) below, in which when n is 2, a plurality of $R_{1b}$ and $Y_2$ are optionally same or different,

[Chemical Formula 4]

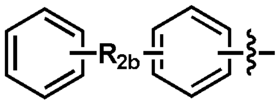

(2-1)

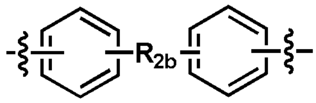

(2-5)

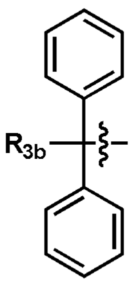

(2-2)

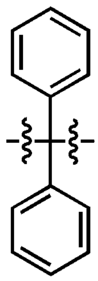

(2-6)

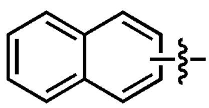

(2-3)

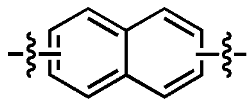

(2-7)

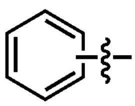

(2-4)

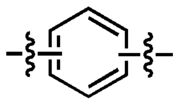

(2-8)

in General Formulae (2-1) and (2-5) above, $R_{2b}$ is a single bond, an oxygen atom, or a methylene group; in General Formula (2-2) above, $R_{3b}$ is a hydrogen atom or a methyl group; and at least one hydrogen atom constituting aromatic rings in General Formulae (2-1) to (2-8) above is substituted by a fluorine atom or a $CF_3$ group; and
(C) a radical polymerization initiator.

2. The curable resin composition according to claim 1, wherein a mass ratio between the component (A) and the component (B) is 99:1 to 10:90.

3. The curable resin composition according to claim 1 or 2, wherein $R_{1a}$ in General Formula (1) above is a hydrogen atom, and $Y_1$ is a single bond or a methylene group.

4. The curable resin composition according to claim 1 or 2, wherein $R_{2a}$ in General Formulae (1-1) and (1-4) above and $R_{2b}$ in General Formulae (2-1) and (2-5) above are a single bond or an oxygen atom.

5. The curable resin composition according to claim 1 or 2, wherein $R_{3a}$ in General Formula (1-2) above and $R_{3b}$ in

General Formula (2-2) above are a hydrogen atom.

**6.** The curable resin composition according to claim 1 or 2, wherein a fluorine atom content in the component (A) is 1 to 24% by mass.

**7.** The curable resin composition according to claim 1 or 2, wherein the component (A) contains at least one of structures represented by General Formulae (3) and (4) below:

[Chemical Formula 5]

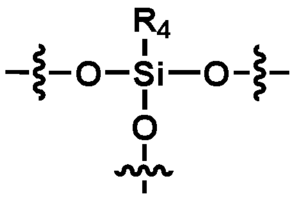
(3)

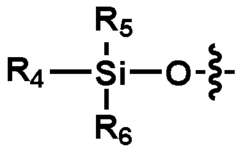
(4)

in General Formulae (3) and (4) above, $R_4$ is a fluorine atom or a $C_{1-20}$ organic group containing one or more fluorine atoms; and in General Formula (4) above, $R_5$ and $R_6$ each independently indicate a methyl group or a phenyl group.

**8.** The curable resin composition according to claim 7, wherein

the component (A) further contains a structure represented by General Formula (5) below, and
a molar ratio between the structures represented by General Formulae (3) and (4) above and the structure represented by General Formula (5) above is 1:1 to 1:1.4:

[Chemical Formula 6]

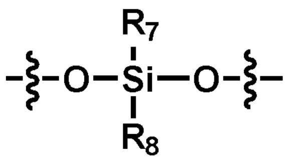
(5)

in General Formula (5) above, $R_7$ and $R_8$ each independently indicate a methyl group or a phenyl group.

**9.** A cured article obtained by curing the curable resin composition according to claim 1 or 2.

**10.** An optical waveguide comprising the cured article according to claim 9.

## INTERNATIONAL SEARCH REPORT

International application No. **PCT/JP2024/032625**

**A. CLASSIFICATION OF SUBJECT MATTER**

***C08F 290/14***(2006.01)i; ***C08G 77/24***(2006.01)i; ***G02B 6/12***(2006.01)i
FI: C08F290/14; G02B6/12 371; C08G77/24

According to International Patent Classification (IPC) or to both national classification and IPC

**B. FIELDS SEARCHED**

Minimum documentation searched (classification system followed by classification symbols)

C08F290/14; C08G77/24; G02B6/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 8-245734 A (ASAHI CHEM IND CO., LTD.) 24 September 1996 (1996-09-24) claims, paragraph [0032], examples 1-7 | 1-9<br>10 |
| X<br>A | JP 2019-520437 A (HENKEL IP & HOLDING GMBH) 18 July 2019 (2019-07-18) claims, paragraphs [0020], [0028]-[0049] | 1-5, 7-9<br>6, 10 |
| X<br>A | JP 2014-529631 A (DONGJIN SEMICHEM CO., LTD.) 13 November 2014 (2014-11-13) claims, paragraphs [0047]-[0070] | 1-7, 9<br>8, 10 |
| X<br>A | JP 2005-23257 A (TOAGOSEI CO., LTD.) 27 January 2005 (2005-01-27) claims, paragraphs [0044], [0059]-[0079] | 1-7, 9<br>8, 10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/032625**

| Patent document cited in search report | Publication date (day/month/year) | Patent family member(s) | Publication date (day/month/year) |
|---|---|---|---|
| JP 8-245734 A | 24 September 1996 | (Family: none) | |
| JP 2019-520437 A | 18 July 2019 | US 2019/0071593 A1<br>claims, paragraphs [0021], [0028]-[0038]<br>WO 2017/192682 A1<br>TW 201819473 A<br>CN 109219631 A<br>KR 10-2019-0005881 A | |
| JP 2014-529631 A | 13 November 2014 | US 2014/0135413 A1<br>claims, paragraphs [0078]-[0103]<br>WO 2013/019040 A2<br>KR 10-2013-0016069 A<br>CN 103732689 A | |
| JP 2005-23257 A | 27 January 2005 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H51148 A
- US 6984483 B
- JP 2020184091 A
- JP H1161081 A